# EUROPEAN PATENT APPLICATION

(11) **EP 1 763 992 A1**
(43) Date of publication of application: **21.03.2007**
(21) Application number: 06120666.0
(22) Date of filing: 14.09.2006
(51) Int. Cl.: A01K 5/01, A47G 23/06

(54) **Stand with lift handle for pet food/water dish**

(30) Priority: 14.09.2005 US 716889 P
(71) Applicant: Montague, Dale J., 87112 NM New Mexico Alburquerq (US)
(72) Inventor: Montague, Dale J., 87112 NM New Mexico Alburquerq (US)
(74) Representative: Viering, Jentschura & Partner

(57) **Abstract**

A stand (12, 32) for supporting one or more pet food bowls or water dishes (15, 35) includes an integrated lifting handle (16, 20, 36, 40) and a supporting base (24, 34) formed from a number of components (22, 23, 42, 43, 44, 45). The size, shape and position of the handle greatly reduce the potential of spilling the contents of the bowl or dish during movement. A grip (20, 40) on the handle is easily grasped to enable movement of the stand and bowls or dishes between selected areas, without spilling the contents of the bowls or dishes while minimizing bending or stooping by a user.

## Description

### CROSS-REFERENCE TO RELATED APPLICATION

This application claims the priority of co-pending Provisional Application No. 60/716,889, entitled Stand with Lift Handle for Pet Food/Water Dish, filed September 14,2005.

### BACKGROUND OF INVENTION

### 1. FIELD OF INVENTION

The invention relates to a combination lifting handle and supporting stand for a pet food/water bowl or dish. Accordingly the invention relates generally to holding and carrying devices, and more particularly to a combination lifting handle and supporting stand for a pet food/water bowl or dish.

### 2. DESCRIPTION OF RELATED ART

Typically pet food/water bowls are placed on the floor or a surface where the pet has access to them. Other times the bowl(s) might be placed within a structure that is designed to hold the bowls; sometimes referred to as "diners" or "feeding stations". These structures might also be elevated to a certain level wherein the animal doesn't need to stoop its head to ground level in order to eat or drink. In either case the person that feeds the pet is required to bend or stoop to retrieve the bowls for cleaning or replenishment. This can be an arduous task for anyone, particularly the elderly or those who have limited physical abilities. For them bending or stooping to ground level is difficult and sometimes impossible.

The following patents show examples of pet bowl designs that include various types of lifting handles: U.S. Pat. No. 5,501,176 to Tully (1996), U.S. Pat. No. 5,887,545 to Cuttress (1999), U.S. Pat No. 6,311,640 to Mercado (2001) and U.S. Pat. No. 6,681,719 Warner (2004).

Although these prior art devices attempt to address the problems associated with the routine feeding of a pet they fall short and, therefore, leave room for improvements. For example, the known prior art devices do not address the task of moving a bowl filled with a liquid or liquid based food and not spilling it. It can be an awkward task to transport a bowl or "feeding station" from or to the ground, or another surface, without spilling the liquid content. This is particularly evident for pet owners who have limited physical abilities and are unable to bend or stoop to the floor level.

Additionally, the prior art shows devices that are physically large in mass and heavy. These devices would occupy considerable floor space within a home or on a surface in another area. Additionally, they would be cumbersome to handle when feeding or cleaning is required. The prior art also does not improve upon the interaction of the user and the device or the pet and the device. Furthermore, the prior art does not address certain ergonomic and physics related design considerations that would make the daily routine of feeding or watering a pet easier and more satisfying for both owner and pet.

Finally, the prior art devices have a number of disadvantages in manufacturing, packaging and distribution, such as:
(a) Tooling: In each case there would be significant and substantial capital investment in tooling, with some devices costing more than others. For example, some of the devices incorporate numerous molded pieces. The tooling costs would be very high as a separate tool would be required for each individual part. Beyond the cost of tooling these individual parts would have to be managed from production, quality control, inventory management and through to final assembly. All of this adds to the overall cost of manufacturing, which in turn pushes the retail price ever higher.
(b) Weight: This is an important factor for both manufacturer and consumer. For the manufacturer a heavy product increases shipping and handling costs as related to energy consumption. Weight impacts the consumption of fossil fuels used in transporting the product within the manufacturing arena and then from manufacturer to reseller. For the consumer weight becomes an issue when the device is used on a daily basis. There is no mention within any of the prior art about "weight," or more precisely the device being "light in weight" as a factor in their designs.
(c) Physical size: An issue for managing inventories and also reducing costs associated with shipping. The prior art shows fairly large and/or cumbersome devices. They do not provide nesting abilities for product packaging, carton packs or retail merchandising. Nor do they allow for a low profile package or carton pack. Retailers generally prefer products that stack or nest so as to get more physical product into less space. Bulky large products with low profit margins just aren't well received by retailers who are looking to maximize profits per square inch of retail display space.
(d) It seems apparent that the prior art devices were not designed with the manufacturing, marketing and retailing thereof in mind. If a manufacturer were to review these inventions and give serious consideration to producing them they would likely be hesitant. The cost of manufacturing the devices as weighed against retail pricing most likely would not demonstrate a clear margin of profit for the manufacturer, distributor and reseller. Therefore, they would not lend themselves to a wise investment of capital and resources.

None of the prior art provides a device to support a pet food/water dish that accomplishes the following: provides support for off-the-shelf bowls; includes an integrated lifting handle within the stand with the position of the handle greatly reducing the potential spilling of the contents of the dish; a stand with a handle designed for easy grasping that provides simple movement of the dish to a countertop or other area; a stand where the dish can then be removed and separated from the stand for easy cleaning by hand or in a dishwasher and replenished with food or water without working around the handle or other parts of the apparatus and a stand that minimizes bending or stooping by a user.

Therefore, although the prior art demonstrates various methods of food/water containment systems for feeding animals, none demonstrate a dish stand with a lift handle in accordance with the present invention.

### SUMMARY OF THE INVENTION

The invention provides an improved device for the feeding and/or watering of pets and is comprised of a stand with an integrated handle.

By means of incorporating a "no-spill design approach" the stand greatly reduces the likelihood of spilling the contents of the food/water dish while transferring the stand to and from the replenishment and feeding areas. This "no-spill design approach" carefully positions the grasping point of the handle in relation to the dish thereby creating a pendulum effect. The center grasping area of the handle is placed directly over the dish center of gravity. By doing so a pendulum effect is created. This pendulum effect greatly reduces the likelihood of spilling the dish's contents during movement from one location to another. Typically, without this benefit, a dish is filled with liquid in a sink or on a countertop and then carried to a feeding area. As this is done the person carrying the dish must hold it static or rigid. However, the liquid moves in response to the movements of the body (legs, arms, hands, etc.) and starts to slosh about the dish. To prevent spilling requires a careful balancing act between the body and its extremities to maintain equilibrium between dish and liquid to keep the liquid from sloshing side to side and spilling over.

But, when the pendulum effect provided by the present invention is put into action the dish and its liquid content move freely as the dish is free to swing from side to side from the pendulum point (grasp point) of the lift handle and the individual's hand. The stand and the dish swing freely in response to the anatomical movements of the human body while lifting and walking. The dish is no longer static and rigid but free to respond and swing to the movement of the body; as a result the liquid within the dish maintains its equilibrium with these movements and mirrors the movements of the dish while the liquid remains very still within the dish. The liquid does not slosh about the dish. The result is the individual transferring the dish of liquid need not have great concern of spilling during the transfer process - the status of the liquid takes care of itself and the daily worry of spilling liquid while walking from the sink to feeding/watering is eliminated.

The size and shape of the stand handle of the present invention provides a means of transferring pet dishes to and from the floor or other surface for cleaning and replenishment without the need to stoop or bend over.

The stand and handle of the present invention may be made in one-piece whereby they do not separate from one another, but is preferably formed from more than one-piece, which pieces are removably held together. The number of pieces depends on whether a single or multi-bowl configuration is used and how a manufacturer decides to make, ship and assemble the invention.

The stand of the present invention is made from light weight materials, manufactured by blow molding or other means to keep it light in weight and, therefore, easily lifted on a daily basis and transported by a person with little effort.

The stand of the present invention is designed to ship as a knock-down-unit in a very small retail package and carton pack.

The stand of the present invention is designed to accept commercially available bowls.

When in use the stand of the present invention occupies a small footprint of valuable floor space or other surfaces.

The stand of the present invention retains a very small horizontal surface area which reduces the need for cleaning its surface.

In terms of packaging, the stand of the present invention is designed as a knock-down-unit (KDU). A popular and favorable method of manufacture that condenses a product to its smallest package possible thereby reducing overall related costs and improving the use of space relative to inventories and retail display purposes.

The two main components of one embodiment of the stand of the present invention are packaged unassembled. This allows for a very slim consumer package. The final benefit is to retailers who can merchandise the product in a small space increasing their potential profit per square inch of retail space. If more than two components are used, they may also be packaged in an unassembled condition, however, the package will, of course be thicker and take up more space.

The stand of the present invention may include the ability to increase the height of the grasping point of the lift handle (while maintaining the center of gravity and pendulum effect) to better accommodate the height or reach of the person using it.

The stand of the present invention may come in various sizes to include various dish sizes (volume) and also various dish heights to accommodate the size of the pet feeding from it.

The stand of the present invention may contain a plurality of dishes.

The handle of the stand of the present invention is curved to allow easy access by a pet to a feed bowl or water dish held on the stand when eating/drinking. That is, the pet may easily approach and use the bowl or dish without interference from the curved handle. The pet, therefore, doesn't have to work around a handle or the like, while eating or drinking, and if two bowls are used may easily move from one side to the other to feed and/or drink from either bowl. This same curvature of the handle creates the balancing benefit during lifting and carrying with the center of gravity under the T-handle, which greatly reduces spilling of the contents during transport.

In accordance with the present invention a stand for pet food/water dish is provided comprising a lift handle and one or more standard off-the-shelf feeding dishes. The present invention provides a combination stand and feed dish/water bowl in which the stand has a body with a base and handle having the features in claim 1. Further embodiments of the invention are described in the dependent claims.

These objects and advantages, as well as others, will become apparent from a consideration of the ensuing description and drawings.

### BRIEF DESCRIPTION OF THE DRAWINGS

The objects and features of the present invention, which are believed to be novel, are set forth with particularity in the appended claims. The present invention, both as to organization and manner of operation, together with further objects and advantages, may best be understood by reference to the following description, taken in conjunction with the accompanying drawings, in which:

Fig. 1 is a front perspective view of a first embodiment of a stand of the present invention supporting a single dish;

Fig. 2 is an exploded front perspective view similar to Fig. 1, showing the single dish removed from the stand;

Fig. 3 is an exploded front perspective view of the stand of Fig. 1;

Fig. 4 is a partial side elevational view of one of the components of the bottom portion of the stand as shown in Fig. 3;

Fig. 5 is a front elevational view of the stand of Fig. 1;

Fig. 6 is a side elevational view of the stand of Fig. 1;

Fig. 7 is a front perspective view of a second embodiment of a stand supporting a pair of dishes;

Fig. 8 is an exploded front perspective view similar to Fig. 7, showing the pair of dishes removed from the stand;

Fig.9 is an exploded front perspective view of the stand of Fig. 7; and

Fig. 10 is a side elevational view of the stand of Fig. 7.

### DETAILED DESCRIPTION OF THE PREFERED EMBODIMENTS

The following description is provided to enable any person skilled in the art to be able to use the invention and sets forth the best modes contemplated by the inventor for carrying out his invention. Various modifications, however, will remain readily apparent to those skilled in the art, since the generic principals of the present invention have been defined herein, specifically to provide for an improved combination stand and integral lift handle that may be used to easily support and transport one or more bowls or dishes while having food or water therein, without requiring bending or stooping.

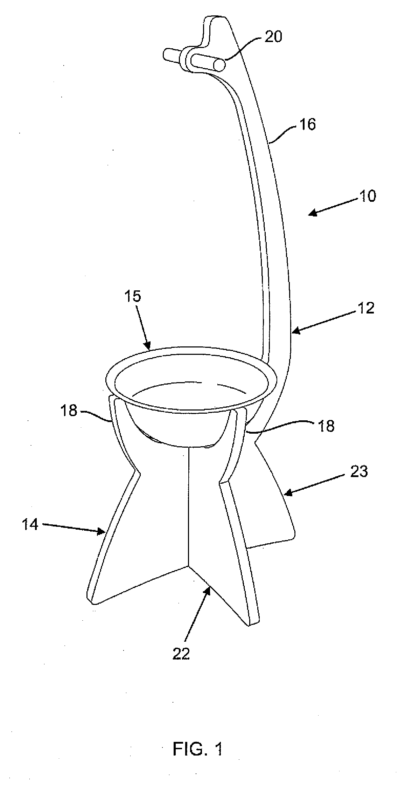

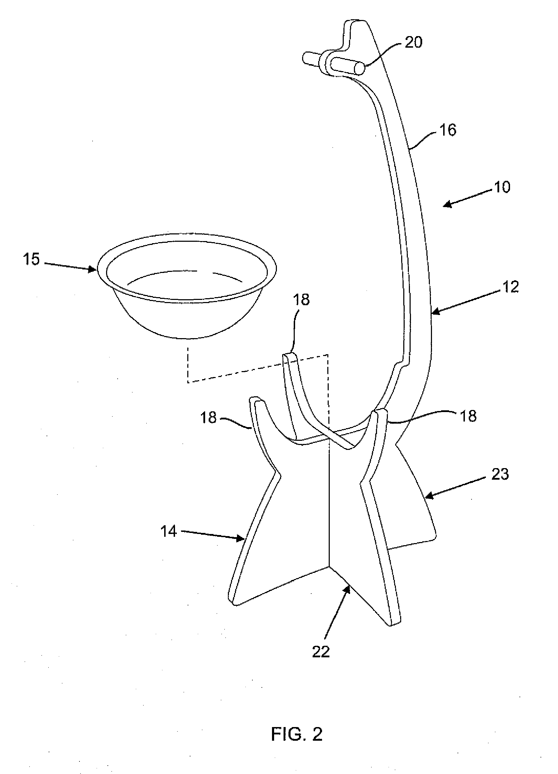

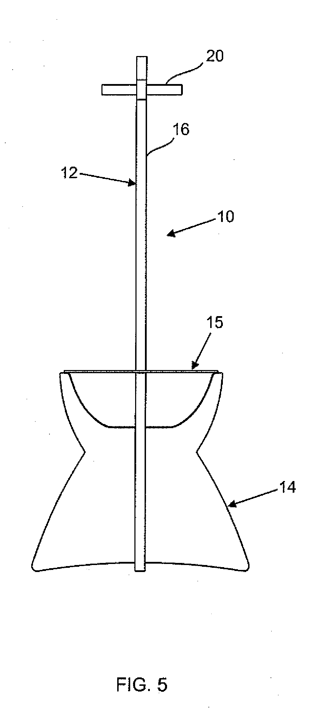

A first embodiment of the combination stand and bowl 10 is illustrated in Figs 1 - 6 of the drawings. There shown is an assembly or combination 10 having a stand 12 with a dish 15 supported in a base or lower portion 14 of the stand. The stand 12 is comprised of two interlocking components 22 and 23 (see Figs. 2-4) held together in any desired fashion. For example, the stand 12 and its base 14 may be formed by insertion of a slot 24 of component 22 into a slot 25 formed in a lower portion of component 23 to hold the components together at approximately 90° to each other. One of the components, such as component 23 also includes an integrally formed upper portion comprising a curved, upstanding lift handle holding portion 16. A grip or handle 20, preferably cylindrical, is held in an opening formed in curved, upstanding lift handle holding portion 16. The intent is to keep the stand assembly 12 simple and easy to understand so that any lay person can identify the components or parts 22, 23 and assemble the stand without the need for intense study, a mechanical aptitude, the need for tools, attaching hardware or bonding agents. Rather the user can assemble and put the stand to use immediately. These two components 22, 23 are structurally rigid and manufactured to withstand conventional daily use while having a lengthy life cycle.

The two components 22, 23 could be manufactured in a variety of methods, for example injection molded plastic or blow molding or cut from a thermo-fused melamine or hardwood. If a rough duty cycle was anticipated the components 22, 23 could be manufactured from a variety of metals or other longer life durable materials such as polyurethanes or various impregnated or laminated fibrous materials, various plasticized materials or recycled materials such as paper or cardboard infused with other compounds. Ideally the components 22, 23 should be manufactured to be light in weight while providing an ample life cycle. Preferably the materials used would also be easily recycled so as to reduce the consumption of valuable resources.

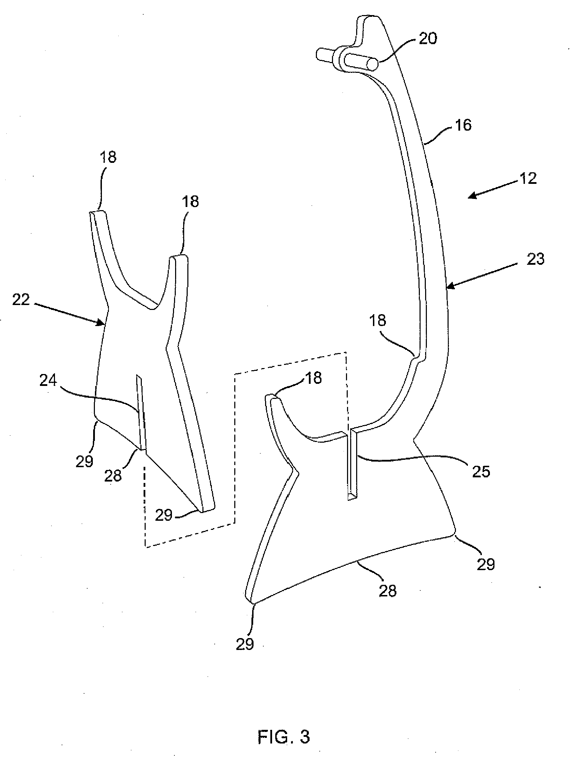

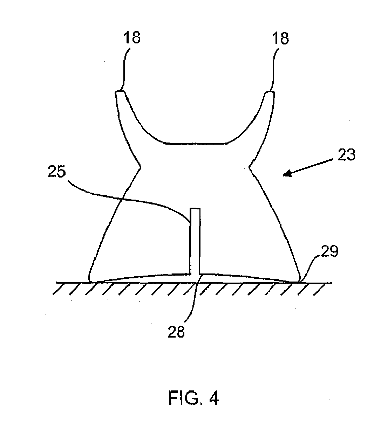

The two components 22 and 23 are designed with interlocking notches or slots 24 and 25 (see Figs. 3 and 4). These notches 24, 25 provide the means to assemble the two components 22 and 23 without the need of any fasteners, bonding agents or tools of any kind. The notches 24 and 25 are engineered with tolerances that produce a snug fit while providing a small amount of frictional resistance. The user simply aligns the notches 24 and 25 of the two components and presses them together for final assembly.

The dish/bowl 15 could be a standard "off-the-shelf" variety or fabricated specifically for the stand 12, in a number of different sizes, depending on the size and/or age of the animal or pet being fed and watered. The dish 15 could be manufactured by stamping, forming or molding. It could be made from materials such as stainless steel, various plastic compounds, fiber reinforced polymers, polyurethanes, ceramics or glass. The dish15 fits on the stand 12 and is held in place by four ribs 18 formed on the components 22 and 23, and may be further supported by downwardly extending curved portions of the ribs.

The stand 12 has been designed and engineered to be stable and not easily tipped over. Components 22 and 23 are purposefully designed to provide a solid footing or foundation for the stand. The bottoms or feet 28 of these components, which bottoms or feet rest on a floor or other surface are curved so that outer end portions or contact areas 29, which actually contact the floor or other surface, are small or minimal in surface area. This allows the stand to rest on floors or other surfaces that may be irregular or non-level while keeping the stand steady and less prone to rocking or tipping. Furthermore, the width of the base or feet of components 22 and 23 are proportionally wide so as to provide optimum stability as related to the height or tallness of the upstanding, curved handle holding portion 16 (see Figs. 1, 3 and 5). This stability or foundation is further increased with the dish 15 in the stand 12 as the weight of the dish combined with any food or water contained therein, further increases the stability of the stand. These design elements and methods combine to provide a stable and functional stand 12 which cannot be easily tipped over if a pet or person bumped into the stand or the curved handle 16.

The handle is a "T-shaped" configuration comprised of the curved upstanding or vertical lift handle holding portion 16 and a horizontal grip or handle portion 20, which is preferably cylindrical. The component 23 comprising the handle is the same height for all sizes of the stand 12 and is sized and dimensioned to make it easy to pick up the combination stand and bowl 10. The T-shaped handle is generally from about 20" (50.8 cm) to about 26" (66 cm) high from a floor supporting the stand to the grip 20. In a number of currently preferred embodiments of the stand 12 of the invention the handle height is about 24" (61 cm). Basically, the intent of this design configuration is to provide a simple and comfortable hand hold or grip to allow a person to easily reach down and comfortably lift and transport the stand 12 by the handle, without having to bend over or stoop. The user has the option of placing their fingers on the underside of the cylindrical handle portion 20 and lifting (wherein no gripping or clinching is required) or they may choose to place a hand on the top of the cylindrical handle portion 20 and grip the handle portion to lift and transport the stand 12. For users that have limited use of the hands and fingers and whose gripping strength or dexterity is compromised due to aging or aliments like arthritis or tendonitis, the handle design remains easy to use - particularly if the user lifts from the underside of the cylindrical handle portion 20 where no clinching is required. The T-handle shape and size is such that it fits comfortably within the fingers and hand providing confidence in those with either large or small hands. It feels neither too bulky nor too fragile nor too delicate. Further stability and confidence of use is gained when lifting due to the horizontal orientation of the handle portion 20 to the curved, vertical handle holding portion 16 and the natural placement of this vertical handle holding portion between the fingers as one positions their hand and fingers around the horizontal cylindrical member 20 of the T-handle. The natural placement of the curved, vertical, upstanding handle holding portion 16 between the user's fingers prevents side-to-side movement of the stand 12 during transport. The T-handle makes it difficult to loose ones grasp of the cylindrical handle portion 20 as this handle portion and the curved, upstanding handle holding portion 16 are completely nested or locked into ones hand, thus preventing both vertical and horizontal movements from occurring. Additionally, this prevents the dish contents from sloshing side to side and spilling.

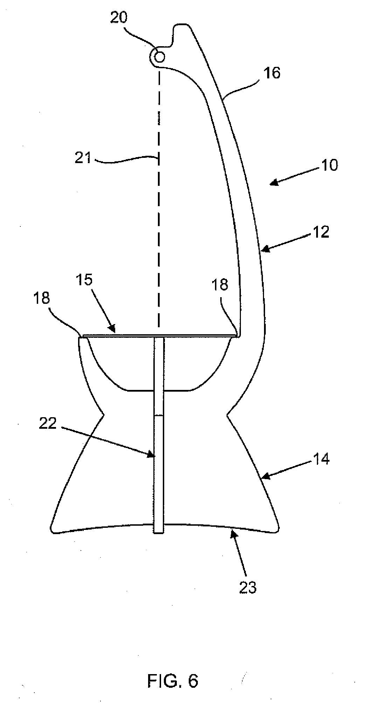

As shown in Figures 3 and 6, the curved, upstanding lift handle portion 16 curves inwardly toward the lower dish supporting base 14 so as to approximately align the center of the grip or handle 20 with a line 21 passing through a centerline of the dish 15 supported in the lower dish supporting base by the ribs 18.

The base 14 of the stand 12 in which the bowls 15 are supported is preferably sized and dimensioned to hold different volume bowls or dishes at different heights depending on the size of the animal or pet being fed or watered. In currently preferred models of the invention the bowls or dishes vary in volume from small to large and are supported by the base 14 at a height of from about 4.5" (11.5 cm) to 10" (25.4 cm) form the supporting surface to the top of the bowl or bowls held in the stand.

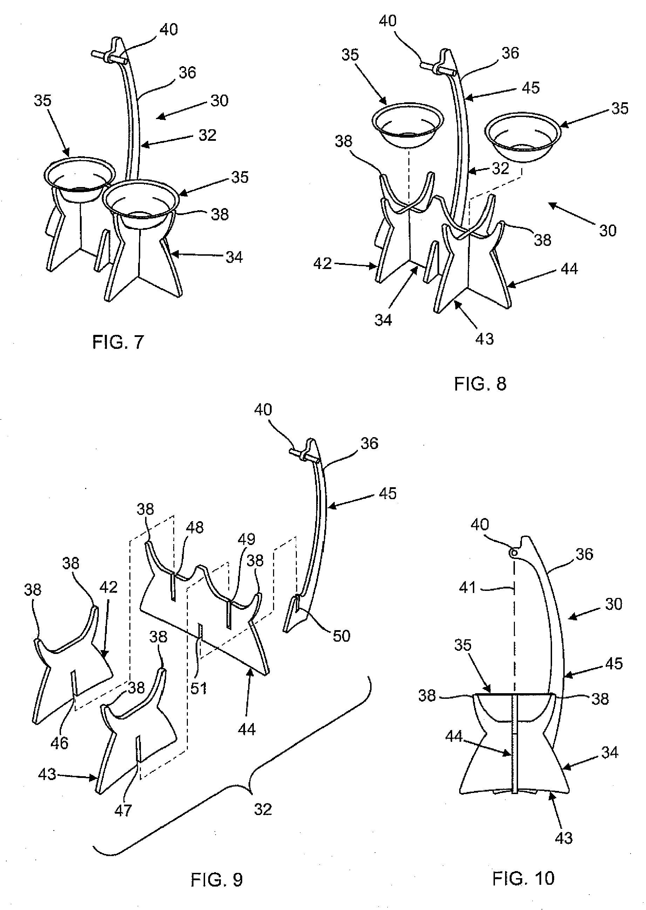

Turning now to Figs 7 - 10 of the drawings there shown is a second embodiment of a combination stand and bowl 30 for supporting a pair of bowls or dishes 35 in a plurality of ribs 38 formed on the components, described below, comprising a base 34 in a lower area of a fully assembled stand 32. The bowls 35 may also further supported by the downwardly curved portions of the ribs 38. The stand 32 may be formed from any desired number of components, but is preferably comprised of four interlocking components 42, 43, 44 and 45 (see Fig. 9) held together in any desired fashion. For example, the stand 32 and its base 34 may be formed by insertion of a slots 46 and 47 of components 42 and 43 into slots 48 and 49 formed in the separate component or divider 44 and a slot 50 formed in a lower portion of component 45 (having the handle 36 formed thereon and extending upwardly from the lower portion) inserted in a further slot 51 in component 44. As mentioned, component 45 also includes a curved, upstanding handle holding portion 36 extending from the lower portion, with a cylindrical handle or grip 40 held in an opening the upper end of the curved, upstanding handle holding portion. This curved, upstanding lift handle portion 36 also curves inwardly toward the lower dish supporting base 34 so as to approximately align the center of the grip or handle 40 with a line 41 passing through a centerline of the dishes 35 supported in the lower dish supporting base by ribs on the interlocking components 42, 43, 44 and 45, in the same manner as discussed above, in connection with the first embodiment.

After being assembled the stand 32 is also very stable and not easily tipped over. Components 42, 43, 44 and 45 are also purposefully designed to provide a solid footing or foundation for the stand. The bottoms or feet portions of these components, which bottoms or feet rest on a floor or other surface, may be curved or flat, depending on the taste of the designer or user.

Accordingly, as will be apparent to those skilled in the art, the present invention provides a combination stand and bowl, which is easily assembled and used by a person to feed and/or water a pet and to transport the stand and a full bowl from one surface or area to another, as desired or needed.

Those skilled in the art will appreciate the various adaptations and modifications of the just-described preferred embodiments can be configured without departing from the scope and spirit of the invention. Therefore, it is to be understood that, within the scope of the appended claims, the invention may be practiced other than as is specifically described herein.

## Claims

1. An easily portable combination stand and pet food/water dish (10, 30)
**characterized in that**:
the stand has a stand body (12, 32) with a curved, upstanding lift handle portion (16, 36) and a lower dish supporting base; and
the lower dish supporting base (14, 34) has a plurality of easily assembled components (22, 23, 42, 43, 44, 45) removably held together for supporting at least one removable dish (15, 35).

2. The easily portable combination stand and pet food/water dish of claim 1, further including a grip (20,40) removably held in an upper end of the curved, upstanding lift handle portion, away from the lower dish supporting base.

3. The easily portable combination stand and pet food/water dish of claims 1 or 2 wherein the curved, upstanding lift handle portion(16, 36) is integrally formed with one of the plurality of easily assembled components (23, 45).

4. The easily portable combination stand and pet food/water dish of claims 1 or 2 wherein the lower dish supporting base has two components (22, 23), and each of the two components includes a slot (24, 25) to enable the two components to be removably held together to form the stand body.

5. The easily portable combination stand and pet food/water dish of claim 4 wherein the two components are held together at an angle of approximately 90° and removably support a single dish on spaced apart ribs.

6. The easily portable combination stand and pet food/water dish of claim 5 wherein the curved, upstanding lift handle portion is integrally formed with one of the two components; and wherein the curved, upstanding lift handle portion curves inwardly, toward the lower dish supporting base, so as to approximately align the grip with a line passing through a centerline of a dish supported in the lower dish supporting base.

7. The easily portable combination stand and pet food/water dish of claims 1 or 2 wherein the lower dish supporting base has at least four components, and each of the at least four components includes at least one slot to enable the at least four components to be removably held together to form the stand body.

8. The easily portable combination stand and pet food/water dish of claim 7 wherein the curved, upstanding lift handle portion is integrally formed with one of the two components; and wherein the curved, upstanding lift handle portion curves inwardly, toward the lower dish supporting base, so as to approximately align the grip with a line passing through a centerline of a plurality of dishes supported in the lower dish supporting base.

9. The easily portable combination stand and pet food/water dish of claims 1 or 2 wherein the lower dish supporting base has two components, and each of the two components includes a slot to enable the two components to be removably held together at an angle of approximately 90° to form the stand body to removably support a single dish on spaced apart ribs; and wherein the upstanding lift handle portion is integrally formed with the lower base supporting portion and curves inwardly, toward the lower dish supporting base, so as to approximately align the grip with a line passing through a centerline of a dish and wherein the upstanding lift handle portion is integrally formed with the lower base supporting portion and curves inwardly, toward the lower dish supporting base, so as to approximately align the grip with a line passing through a centerline of a plurality of dishes supported in the lower dish supporting base.

10. The easily portable combination stand and pet food/water dish of claims 1 or 2 wherein the lower dish supporting base is comprised of at least four components, and each of the at least four components includes at least one slot to enable the at least four components to be removably held together to form the stand body so as to removably support at least two dishes on a plurality of spaced apart ribs; and wherein the upstanding lift handle portion is integrally formed with one of the at least four components in the lower base supporting portion and curves inwardly, toward the lower dish supporting base, so as to approximately align the grip with a line passing through a centerline of a plurality of dishes supported in the lower dish supporting base..
